# EUROPEAN PATENT APPLICATION

(11) **EP 4 177 914 A1**
(43) Date of publication of application: **10.05.2023**
(21) Application number: 20942989.3
(22) Date of filing: 02.07.2020
(51) Int. Cl.: H01F 27/00, H02M 5/00, H02M 5/06, H01F 29/02, H02P 13/06

(54) **VARIABLE-IMPEDANCE ELECTRIC TRANSFORMER**

(71) Applicant: Prolec-GE Internacional, S. de R. L. de C. V., Apodaca, Nuevo León, 66600 (MX)
(72) Inventor: BETANCOURT RAMÍREZ, Enrique, Nuevo León, 64619 (MX)
(74) Representative: Elzaburu S.L.P.
(86) International application number: PCT/IB2020/056235
(87) International publication number: WO 2022/003402

(57) **Abstract**

Disclosed is an electric transformer that has variable impedance, optionally under load, which includes, in at least one of its transformation phases, a first impedance-varying auxiliary winding having inverse magnetic polarity and a second impedance-varying auxiliary winding having inverse magnetic polarity, both auxiliary windings being divided into impedance circuit modules and being series connected by interposing the impedance circuit modules one by one, defining impedance variation modules that comprise impedance taps designed to be electrically coupled to a stepped-impedance-tap selector controlled by an impedance controller that allows the impedance of the transformation phase or of the electric transformer to be varied.

## Description

### TECHNICAL FIELD OF THE INVENTION

The present invention refers to electric transformers, more specifically, it refers to a variable-impedance electric transformer using impedance-varying auxiliary windings connected in series and having inverse magnetic polarity, and whose circuit modules are interposed and controlled by a single stepped-impedance-tap selector per transformation phase.

### BACKGROUND OF THE INVENTION

At present, in electric transformers, either power or distribution, which have transformation phases made up of primary and secondary windings wound around a magnetic core, it is common for them to incorporate auxiliary windings configured to conduct electric current around the same core magnetic to vary, either the electrical voltage or the impedance, of one or more of the transformation phases or of the electric transformer itself

An example of implementation of a variable-impedance electric transformer using auxiliary windings is the one described by Hiromichi Sato et al. in Japanese Patent Application Publication JP-2001044051, where a variable-impedance electric transformer having a magnetic flux control circuit is shown, where a primary winding and a secondary winding are wound on a magnetic core. In one part of the magnetic core there is a window or hole, in which two control coils, connected in series, are wound around two sides of the window. An induced electric voltage is generated in the control coils, but these, being connected in series, cancel the induced electric voltage. Consequently, an induced electric voltage is not applied to a control circuit. The winding structure is like an ordinary single-phase transformer, but with the difference that it includes a controllable flux magnetic control circuit consisting of a window with control coils, a magnetic core, and a control circuit.

Another example of the application of auxiliary windings in an electric transformer is described by Jesús Ávila et al. in the Mexican patent MX-293203, where an electric transformer of controlled electric voltage is shown that has a magnetic core; at least one primary winding supplied with a main current to generate a main magnetic flux on the magnetic core; at least one secondary winding; and at least one magnetic distortion field generator supplied with a control current for generating a magnetic distortion field on the magnetic core, such that the control current has an intensity that varies in relation to the detection of the output electric voltage required in relation to the operating load of electric transformer; such that the magnetic distortion field combines with the main magnetic flux generating a distortion of it, achieving a change in the reluctance of the magnetic core and thus a change in the output electrical voltage of the electric transformer.

A further example of the application of auxiliary windings in an electric transformer is described by William James Premerlani et al. in US patent application publication US2018/0330862A1. This patent application describes an electric transformer that includes conductive windings (primary and secondary windings) and impedance-varying windings (auxiliary windings) that extend around a magnetic core of a transformation phase, and an impedance switch for each transformation phase. Conductive windings and impedance-varying windings are configured to conduct electric current around the magnetic core of the transformation phase. The impedance switch is actuated to alter any of the impedance-varying windings that are conductively coupled with the conductive windings, and any of the impedance-varying windings that are disconnected from the conductive windings. For example, the impedance switch can connect a tap from any of the taps on each transformation phase to add one or more circuit pairs of the odd and even windings in series with the lead windings to increase or decrease the leakage impedance of the electric transformer. Furthermore, each impedance switch corresponding to each transformation phase of the electric transformer can be turned on and changed to the same setting to change the leakage impedance of the electric transformer.

Another example of the application of auxiliary windings in an electric transformer is described by Ibrahima Ndiaye et al. in US patent application number US16/689,438. This patent application describes an electric transformer that includes conductive windings (primary and secondary windings); impedance-varying windings (auxiliary windings) formed in turn by positive windings and negative windings; both the conductive windings and the impedance-varying windings extend around a magnetic core of a transformation phase and are configured to conduct electric current around the magnetic core of the transformation phase; a first impedance tap changer configured to electrically couple to the positive windings of the impedance-varying windings; a second impedance tap changer configured to electrically couple to the negative windings of the impedance-varying windings; and an impedance controller configured to control the first impedance tap changer and the second impedance tap changer to change an impedance of the electric transformer. The impedance controller controls the operation of the first impedance tap changer and the second impedance tap changer, directing the first impedance tap changer and the second impedance tap changer to couple with a first portion of the impedance-varying windings selectively and electrically. For example, the first impedance tap changer may be electrically coupled with a positive winding portion and the second impedance tap changer may be electrically coupled with a negative winding portion of the impedance-varying windings. Subsequently, the impedance controller may direct the first impedance tap changer and the second impedance tap changer to couple to a different portion of the positive windings and negative windings of the impedance-varying windings selectively and electrically, respectively.

Although the electric transformers described above allow flexibility in the variation, either of the electric voltage and/or of the impedance, of one or more of the transformation phases or of the electrical transformer itself, its complexity in the design, configuration, internal trace and interconnection of the conductive windings and impedance-varying windings is very high, which implies, for example, the use of a second impedance tap changer, which leads to oversizing and increased weight of the electric transformer and therefore hence higher manufacturing cost.

In view of the limitation found, it is therefore necessary to offer a variable-impedance electric transformer with a new interconnection configuration of its auxiliary windings (impedance-varying windings), in such a way that only a stepped-impedance-tap selector is used per transformation phase, to significantly reduce the degree of complexity of the internal trace of the same electric transformer.

### SUMMARY OF THE INVENTION

In view of what has been previously described and with the purpose of solving the limitations found, it is the object of the invention to offer a variable-impedance electric transformer, comprising one or more transformation phases extending around a magnetic core, at least one transformation phase includes conductive windings; a first impedance-varying auxiliary winding divided into impedance circuit modules, the first impedance-varying auxiliary winding having a magnetic polarity; a second impedance-varying auxiliary winding divided into impedance circuit modules, the second impedance-varying auxiliary winding having an inverse magnetic polarity to the magnetic polarity of the first impedance-varying auxiliary winding; the first impedance-varying auxiliary winding and second impedance-varying auxiliary winding are connected in series, defining impedance variation modules by interposing the impedance circuit modules one by one, each impedance variation module includes one impedance circuit modules of the first impedance-varying auxiliary winding connected in series with one impedance circuit modules of the second impedance-varying auxiliary winding, and each impedance variation module having a impedance tap; a stepped-impedance-tap selector configured to be electrically coupled to the impedance taps of the impedance variation modules; and an impedance controller configured to control the stepped-impedance-tap selector for varying the impedance of the transformation phase or the electric transformer.

It is also an object of the present invention to provide a method for varying the impedance in an electric transformer comprising one or more transformation phases extending around a magnetic core, the method includes the steps of: (a) disposing conductive windings; (b) disposing a first impedance-varying auxiliary winding divided into impedance circuit modules, the first impedance-varying auxiliary winding having a magnetic polarity; (c) disposing a second impedance-varying auxiliary winding divided into impedance circuit modules, the second impedance-varying auxiliary winding having an inverse magnetic polarity to the magnetic polarity of the first impedance-varying auxiliary winding; (d) connecting the first impedance-varying auxiliary winding and second impedance-varying auxiliary winding in series, by interposing the impedance circuit modules one by one for defining impedance variation modules, each impedance variation module includes one impedance circuit modules of the first impedance-varying auxiliary winding connected in series with one impedance circuit modules of the second impedance-varying auxiliary winding, and each impedance variation module having a impedance tap; (e) electrically coupling a stepped-impedance-tap selector to the impedance taps of the impedance variation modules; and (f) controlling, by an impedance controller, the stepped-impedance-tap selector for varying the impedance of the transformation phase or the electric transformer.

### BRIEF DESCRIPTION OF THE DRAWINGS

The characteristic details of the invention are described in the following paragraphs together with the accompanying figures, which are for the purpose of defining the invention, but without limiting its scope.
Figure 1 illustrates a sectioned perspective view of a variable-impedance electric transformer in accordance with the present invention.
Figure 2A illustrates a perspective view of a first embodiment of a magnetic core and its transformation phases of a variable-impedance column-type electric transformer in accordance with the present invention.
Figure 2B illustrates a perspective view of a second embodiment of a magnetic core and its transformation phases of a variable-impedance armored-type electric transformer in accordance with the present invention.
Figure 3 illustrates a circuit diagram of one embodiment of a transformation phase of a variable-impedance electric transformer, either column-type or armored-type, in accordance with the present invention: and
Figure 4 illustrates a flowchart of a method for varying the impedance of an electrical transformer, either column type or armored type, in accordance with the present invention.

### DETAILED DESCRIPTION OF THE INVENTION

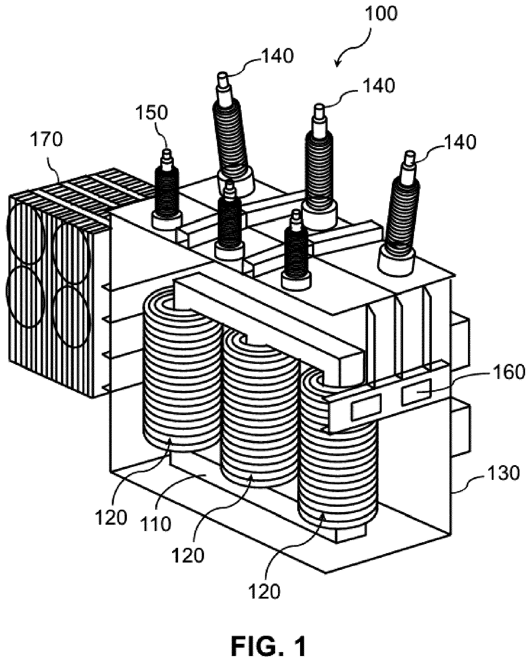

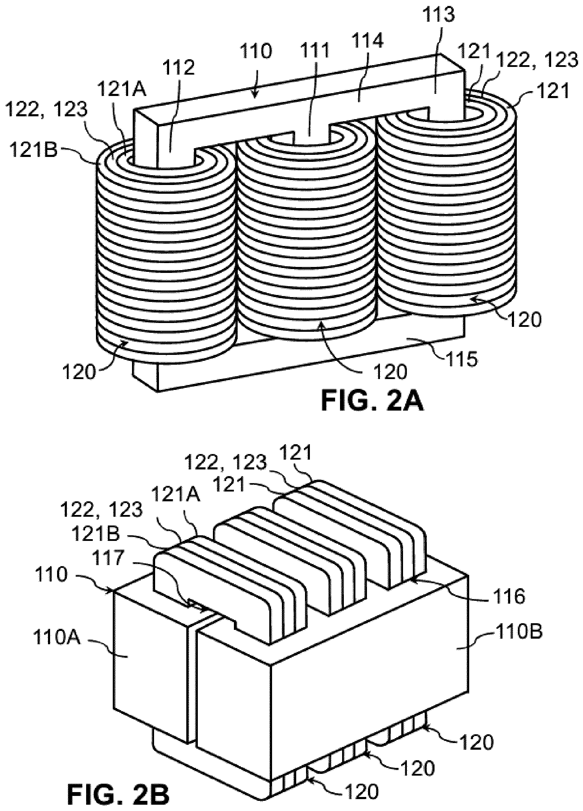

Referring to Figure 1, a sectioned perspective view of a variable-impedance electric transformer **100** in accordance with the present invention is illustrated. The electric transformer **100** can be power or distribution, either column-type or armored-type, and includes a magnetic core **110** and one or more transformation phases **120** contained inside a tank **130** and immersed in a dielectric fluid. Transformation phases **120** are wound around magnetic core **110** and are connected to high voltage terminals **140** and low voltage terminals **150** that extend externally to tank **130.** Electric transformer **100** includes a central controller **160** that is arranged in an outer surface of tank **130** and which controls the operation of a stepped-impedance-tap selector (not shown) in connection with each transformation phase **120.** One or more cooling systems **170** may be operatively coupled with electric transformer **100** and configured to maintain an operating temperature of the same electric transformer **100.** The characteristic details of the configuration of the transformation phase **120** are seen later in the description of Figure 2A and Figure 2B, depending on whether the electric transformer **100** is column-type or armored-type.

Now referring to Figure 2A, there is illustrated a perspective view of a first embodiment of a magnetic core **110** and its transformation phases **120** of a of a variable-impedance column-type electric transformer **100** in accordance with the present invention. In this embodiment, the magnetic core **110** is column-type, provided with a central column **111** and two lateral columns **112** and **113,** all the columns being arranged substantially in the same plane. The three columns **111, 112** and **113** have their upper ends interconnected by an upper yoke **114,** while their lower ends are interconnected by a lower yoke **115.** The magnetic core **20** is advantageously made up of stacked sheets which are parallel to the plane at the which the three columns **111, 112** and **113** are located. The material, number and thickness of the plates that constitute the different columns **111, 112** and **113** and upper and lower yokes **114** and **115,** can of course be selected according to the usual criteria for the design of magnetic cores.

Each transformation phase **120** is arranged and wound around each of the columns **111, 112** and **113** of the magnetic core **110.** In the electric transformer **100** of the present invention, each transformation phase **120** is formed by conductive windings **121** (which may be, for example, a primary winding **121A** and a secondary winding **121**B), a first impedance-varying auxiliary winding **122** and a second impedance-varying auxiliary winding **123.** The first impedance-varying auxiliary winding **122** and the second impedance-varying auxiliary winding **123** are galvanically connected in series and are wound in such a way that their respective impedance circuit modules (not shown) are interposed one by one. The conductive windings **121,** the first impedance-varying auxiliary winding **122** and the second impedance-varying auxiliary winding **123** are wound around each of the columns **111, 112** and **113** of the magnetic core **110** and each of their spirals are insulated, by the use, for example, of dielectric paper. The first impedance-varying auxiliary winding **122** and the second impedance-varying auxiliary winding **123,** in this embodiment, are arranged radially to the conductive windings **121,** however, they may also be arranged axially to the conductive windings **121.** It will be appreciated that multiple primary windings **121A,** multiple secondary windings **121B,** multiple first impedance-varying auxiliary windings **122,** and multiple second impedance-varying auxiliary winding **123** could be used within each transformation phase **120.**

Referring now to Figure 2B, there is a perspective view of a second embodiment of a magnetic core **110** and its transformation phases **120** of a variable-impedance armored-type electric transformer **100** in accordance with the present invention. In this embodiment, the magnetic core **110** is armored-type, provided with a first section **110A** and a second section **110B,** arranged in a side-by-side relationship. Each section **110A** and **110B** of the magnetic core **110** has three openings for windings **116.** The electric transformer **100** includes three transformation phases **120,** each of which includes conductive windings **121** (which may be, for example, a primary winding **121A,** a secondary winding **121B**), a first impedance-varying auxiliary winding **122** and a second impedance-varying auxiliary winding **123** arranged in an interposed manner. The first impedance-varying auxiliary winding **122** and the second impedance-varying auxiliary winding **123** are galvanically connected in series and are wound such that their respective impedance circuit modules (not shown) are interposed one by one. The conductive windings **121,** the first impedance-varying auxiliary winding **122,** and the second impedance-varying auxiliary winding 123 are stacked in side-by-side relationship and wound to magnetic core **110** encompassing a portion of first section **110A** and second section **110B** in alignment with corresponding openings for windings **116** of first section **110A** and second section **110B,** in turn forming openings **117.** It will be appreciated that multiple primary windings **121A,** multiple secondary windings **121B,** multiple first impedance-varying auxiliary winding **122** and multiple second impedance-varying auxiliary winding **123** could be used within each transformation phase **120.**

In both Figure 2A and Figure 2B, each of the conductive windings **121** may be divided into voltage circuit modules and each voltage circuit module is connected to a voltage tap or contact and is formed by a plurality of segments or turns of the conductive winding **121** electrically connected in series. The number of voltage circuit modules and their respective number of segments or turns determine the permissible transformation ratio regulation band (electrical voltage regulation) of the electric transformer **100,** which can be implemented by means of a stepped voltage tap selector (not shown) that is selectively and electrically coupled to the voltage taps of the voltage circuit modules. The voltage taps are provided with corresponding contact devices and these contacts are, for example, insulated cables or copper bars or other conductors.

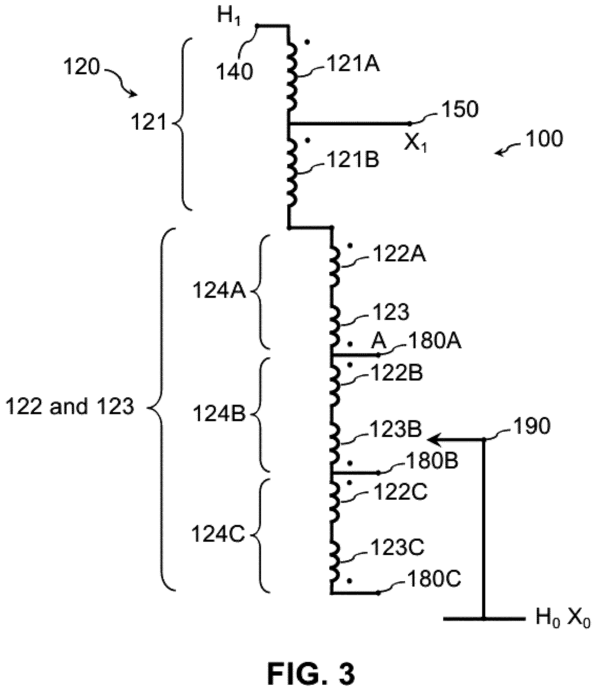

Now in Figure 3, there is illustrated a circuit diagram of one embodiment of a transformation phase **120** of a variable-impedance electric transformer **100,** either column-type or armored-type, in accordance with the present invention. The first impedance-varying auxiliary winding **122** is divided into impedance circuit modules **122A, 122B,** and **122C,** while the second impedance-varying auxiliary winding **123** is divided into impedance circuit modules **123A, 123B,** and **123C.** Each impedance circuit module **122A, 122B,** and **122C** of the first impedance-varying auxiliary winding **122** is formed by a plurality of segments or turns of the first impedance-varying auxiliary winding **122,** while each impedance circuit module **123A, 123B,** and **123C** of the second impedance-varying auxiliary winding **123** is formed by a plurality of segments or turns of the second impedance-varying auxiliary winding **123.**

The first impedance-varying auxiliary winding **122** and the second impedance-varying auxiliary winding **123** are of reverse magnetic polarity, that is, the first impedance-varying auxiliary winding **122** has a magnetic polarity and the second impedance-varying auxiliary winding **123** has an inverse magnetic polarity to the magnetic polarity of the first impedance-varying auxiliary winding **122.**

The first impedance-varying auxiliary winding **122** and the second impedance-varying auxiliary winding **123** are connected in series, defining impedance variation modules **124A, 124B** and **124C** by interposing one by one their impedance circuit modules **122A, 122B, 122C, 123A, 123B** and **123C** to maintain inverse magnetic polarity between both impedance-varying auxiliary windings **122** and **123.** Each impedance variation module **124A, 124B** and **124C** is formed by an impedance circuit module of the first impedance-varying auxiliary winding **122** connected in series, under a galvanic connection, to an impedance circuit module of the second impedance-varying auxiliary winding **123,** that is to say the impedance variation module **124A** includes the impedance circuit module **122A** of the first impedance-varying auxiliary winding **122** and the impedance circuit module **123A** of the second impedance-varying auxiliary winding **123;** the impedance variation module **124B** includes the impedance circuit module **122B** of the first impedance-varying auxiliary winding 122 and the impedance circuit module **123B** of the second impedance-varying auxiliary winding **123;** and the impedance variation module **124C** includes the impedance circuit module **122C** of the first impedance-varying auxiliary winding **122** and the impedance circuit module **123C** of the second impedance-varying auxiliary winding **123.** Each impedance variation module **124A, 124B** and **124C** in turn is connected to an impedance tap **180A, 180B,** and **180C,** respectively. The impedance taps **180A, 180B** and **180C** are provided with corresponding contact devices and these contacts are for example insulated wires or copper bars or other conductors.

The number of impedance variation modules, the number of impedance circuit modules of the first impedance-varying auxiliary winding **122** and of the second impedance-varying auxiliary winding **123,** and their respective number of segments or turns determine the permissible impedance regulation band of the transformation phase **120** or of the electric transformer **100** itself, which can be implemented by means of an stepped-impedance-tap selector **190** that selectively and electrically couples to the impedance taps **180A, 180B** and **180C** of the impedance variation modules **124A, 124B** and **124C.**

An operator can control the electric transformer **100** through a central controller **160.** For example, central controller **160** can be placed at a location external to electric transformer **100** so that it can be accessed by the operator. The central controller **160** may also be referred to as a workstation or the like. Central controller **160** may include data processing circuitry, including one or more computer processors (e.g., microcontrollers) or other logic-based devices that perform operations based on one or more instruction sets (e.g., software). An operator can control the transformation ratio and/or a leakage reactance (leakage impedance) of the electric transformer **100** by controlling one or more processors of the central controller **160.**

Central controller **160** may include, among other things, one or more input and/or output devices (for example, a keyboard, electronic mouse, printer, or the like), a graphical user interface or GUI, a voltage controller, and an impedance controller (not shown). The voltage controller and/or impedance controller may be solid state or mechanical switches, knobs, buttons, switches, a touch screen, or the like.

The voltage controller is electrically connected to the stepped-voltage-tap selector (not shown) of each transformation phase **120** of the electric transformer **100.** For example, the stepped-voltage-tap selector may be a motorized system that may allow it to be select the voltage taps of the voltage circuit modules to change the transformation ratio of the transformation phase **120** or of the electric transformer **100.**

The impedance controller is electrically connected to the stepped-impedance-tap selector **190** of each transformation phase **120** of the electric transformer **100.** For example, the stepped-impedance-tap selector **190** can be a motorized system that can allow the selection of the impedance taps **180A, 180B** and **180C** of the impedance variation modules **124A, 124B** and **124C,** respectively, to vary the impedance of the transformation phase **120** or of the electric transformer **100,** by controlling an amount of power passing through the electric transformer **100.** Optionally, the impedance controller can be manipulated to change the impedance of the electric transformer **100** to control an amount of short-circuit current that is allowed to flow through the electric transformer **100.** For example, the impedance controller can increase or decrease the amount of short-circuit current that is allowed to flow through electric transformer **100** or through each of the transformation phases **120.** Optionally, the impedance controller can control the impedance of one or more transformation phases **120** to balance an amount of power that is allowed to flow through each of the transformation phases **120.**

In one or more embodiments, the operator can manipulate the impedance controller to change the impedance of one or more of the transformation phases **120** or the impedance of the electric transformer **100** while the transformer phase **120** is in operation, i.e., under load. The impedance controller controls the operation of each stepped-impedance-tap selector **190.** For example, the impedance controller commands the stepped-impedance-tap selector **190** to selectively mate with an impedance variation modules **124A, 124B,** or **124C,** where one impedance circuit modules **122A, 122B** or **122C** of this impedance variation module **124A, 124B** or **124C** belongs to the first impedance-varying auxiliary winding **122** and the other impedance circuit modules **123A, 123B** or **123C** of this impedance variation module **124A, 124B** or **124C** belongs to the second impedance-varying auxiliary winding **123** so as to vary the impedance of one or more of the transformation phases **120** or the impedance of the electrical transformer **100.**

As illustrated in the Figure 3 embodiment, impedance taps **180A, 180B,** and **180C** of impedance variation modules **124A, 124B,** and **124C,** respectively, are operatively coupled with the impedance controller (not shown) and the stepped-impedance-tap selector **190.** An operator of electric transformer **100** can change the impedance of transformation phase **120** or electric transformer **100** by controlling stepped-impedance-tap selector **190.** For example, for primary winding **121A** it is made pass, through the high voltage terminal **140** (**H₁**) to which it is connected, a main current that induces a main magnetic flux in the magnetic core **110** to generate a transformation of the voltage through the secondary winding **121B** outputting a current low voltage through the low voltage terminal **150** (**X₁**), so that under load the operator of the electric transformer **100** can change the impedance of the electric transformer **100** by changing a configuration of the impedance controller to connect an inner end of terminal **H₀X₀** to any of the impedance taps **180A, 180B** and **180C** through the stepped-impedance-tap selector **190.**

In one or more embodiments, the impedance controller of the central controller **160** may be a knob that can be turned to one or more settings to change the stepped-impedance-tap selector **190.** Optionally, the impedance controller may be a keyboard, display touch or similar, so that the operator can modify, by selecting and/or entering a corresponding code, the configuration of the stepped-impedance-tap selector **190.** A single selection, manipulation, indication or similar, by the operator through the impedance controller switches to any of the impedance taps **180A, 180B,** and **180C** with which the stepped-impedance-tap selector **190** is electrically coupled.

As the interconnection of the impedance circuit modules **122A, 122B** and **122C** of the first impedance-varying auxiliary winding **122** with the impedance circuit modules **123A, 123B** and **123C** of the second impedance-varying auxiliary winding **123,** respectively, are corresponding to define the impedance variation modules **124A, 124B** and **124C.** As an example, the operator can use the impedance controller to vary the impedance of a transformation phase **120** to have a lower impedance leakage setting. By manipulating the impedance controller to control the electric transformer **100** to change the transformation phase **120** to have a lower impedance leakage setting, stepped-impedance-tap selector **190** may be electrically coupled with the first impedance tap **180A** by whereby the lowest impedance value of the electric transformer **100** is obtained in relation to the connection of the impedance taps **180A, 180B** and **180C.** By changing the impedance of the electric transformer **100,** an amount of power that can pass through the electric transformer **100** can be controlled. Additionally, or alternatively, by changing the impedance of the electric transformer **100,** a permissible fault current level can be changed in the electric transformer **100.** For example, the permissible fault current level may be a predetermined threshold that when occurred, the electric transformer **100** fails. By changing the impedance of the electric transformer **100,** the permissible fault current level can be changed from the predetermined threshold to a threshold that has a higher value, or to a threshold that has a lower value.

Alternatively, the operator can use the impedance controller to change transformation phase **120** to have a higher impedance leakage setting. By manipulating the impedance controller to change the impedance to the higher setting, the stepped-impedance-tap selector **190** can be electrically coupled with the latest impedance tap **180C.** For example, the stepped-impedance-tap selector **190** with the last impedance tap **180C,** the highest impedance value of the electric transformer **100** is obtained relative to the connection of the impedance tap **180A** and the impedance tap **180B.** For example, the impedance controller changes the impedance of the electric transformer **100** by switching the impedance variation modules **124A, 124B** and **124C** of the first impedance-varying auxiliary winding **122** and second impedance-varying auxiliary winding **123** that are connected to the conductive windings **121.**

In the illustrated embodiment, the first impedance-varying auxiliary winding **122** includes three impedance circuit modules **122A, 122B** and **122C,** and the second impedance-varying auxiliary winding **123** includes three impedance circuit modules **123A, 123B** and **123C** such that the impedance circuit modules **122A, 122B, 122C, 123A, 123B** and **123C** are connected in series in an interposed manner, defining the impedance variation modules **124A, 124B** and **124C.** Optionally, in each transformation phase **120,** the first impedance-varying auxiliary winding **122** can have any number of impedance circuit modules, while the second impedance-varying auxiliary winding **123** has the same number of impedance circuit modules as the number of impedance circuit modules of the first impedance-varying auxiliary winding **122.** The same number of impedance circuit modules of the first impedance-varying auxiliary winding **122** and second impedance-varying auxiliary winding **123** allows the leakage reactance of the electric transformer **100** to change without affect the transformation ratio of the electric transformer **100.** The impedance variation modules **124A, 124B,** and **124C** are designed with impedance taps **180A, 180B,** and **180C** to match a reactance value of the electric transformer **100** to changes in the position of the impedance variation modules **124A, 124B** and **124C.** Furthermore, the position of the impedance variation modules **124A, 124B** and **124C** can be done while the electric transformer **100** is under load or online, i.e., in operation.

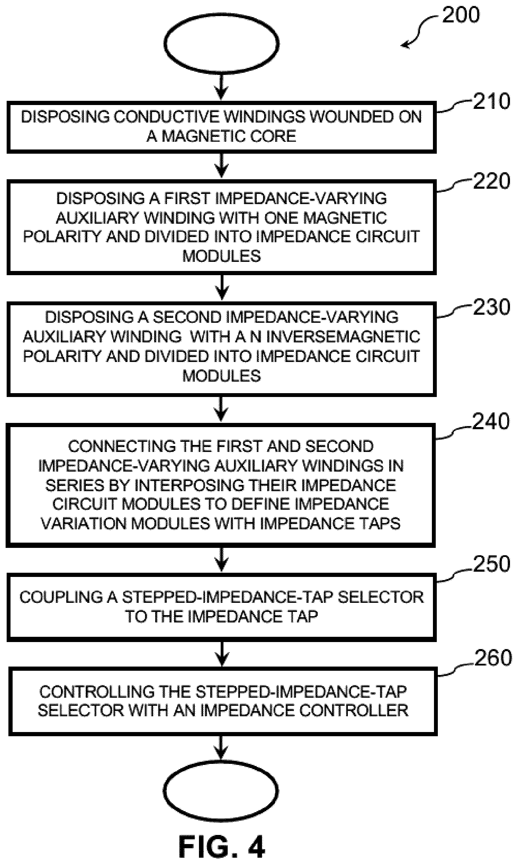

Referring now to Figure 4 in conjunction with Figure 3, a flowchart of a method **200** for varying impedance in an electric transformer **100** is shown. Certain steps in the method or in the flow of the method that are referenced from hereinafter naturally precede others for the invention to function as described. However, the invention is not limited to the order of the steps described if said order or sequence does not alter the functionality of the invention. That is, it is recognized that some steps may be performed before, after, or in parallel with other steps without departing from the scope or spirit of the invention.

In step **210,** conductive windings **121** are disposed around the magnetic core **110** of the electric transformer **100.**

In step **220,** a first impedance-varying auxiliary winding **122** with a magnetic polarity divided into impedance circuit modules **122A, 122B** and **122C** is disposed around the conductive windings **121,** said arrangement being radial or axial to the conductive windings **121.**

In step **230,** a second impedance-varying auxiliary winding **123** with an inverse magnetic polarity to the magnetic polarity of the first impedance-varying auxiliary winding **122** and divided into impedance circuit modules **123A, 123B** and **123C** is disposed around the conductive windings **121,** said arrangement being radial or axial to the conductive windings **210.**

In step **240,** the first impedance-varying auxiliary winding **122** and the second impedance-varying auxiliary winding **123** are connected in series, interposing their impedance circuit modules **122A** and **123A, 122B** and **123B, 122C** and **123C** one by one to defining impedance variation modules **124A, 124B** and **124C,** respectively, each impedance variation module **124A, 124B** or **124C** includes an impedance circuit module **122A, 122B** or **122C** of the first impedance-varying auxiliary winding **122** connected in series with an impedance circuit module **123A, 123B,** or 123C of the second impedance-varying auxiliary winding **123,** and each impedance variation module **124A, 124B,** and **124C** has an impedance tap **180A, 180B,** and **180C,** respectively.

In step **250,** a stepped-impedance-tap selector **190** is electrically coupled to the impedance taps **180A, 180B,** and **180C** of the impedance variation modules **124A, 124B,** and **124C.**

And finally, in step **260,** the stepped-impedance-tap selector **190** is controlled, by means of an impedance controller, to vary the impedance of the transformation phase **120** or of the electric transformer **100,** it being possible to perform the variation of the impedance while the electric transformer **100** is under load.

From the embodiments described above, it appears that the method **200** for varying the impedance in an electric transformer **100** in accordance with the present invention is applicable to any configuration and number of transformation phases **120** of the electric transformer **100,** as observed in all the embodiments described here.

Proceeding with a variation in the impedance of one or more transformation phases **120** or electric transformer **100** can be decided when, for example, transformation phase **120** can be a replacement transformation phase that can be installed within electric transformer **100.** The electrical transformer **100** may have a current leakage impedance level, and the impedance of the replacement transformation phase may need to substantially match the leakage impedance level of electric transformer **100.** As another example, the impedance may need to be changed in one or more transformation phases **120** of a multiphase electric transformer **100** to balance an amount of power configured to flow through each of the transformation phases **120** of the multiphase electric transformer **100.** As another example, an amount of power passing through electric transformer **100** may need to be changed (e.g., increased or decreased). Changing the impedance of the electric transformer **100** changes the amount of power that passes through the electric transformer **100.** As another example, a fault current level of the electric transformer **100** may need to be changed. Changing the impedance of the electric transformer **100** changes the fault current level of the amount of current that can pass through the electric transformer **100.** Optionally, it may be necessary to change the impedance of the electric transformer **100** for any alternate purpose.

Based on the embodiments described above, it is contemplated that modifications to the described embodiment environments, as well as alternative embodiment environments, will be considered obvious to a person skilled in the art under the present description. It is, therefore, contemplated that the claims encompass such modifications and alternatives that fall within the scope of the present invention or their equivalents.

## Claims

1. A variable-impedance electric transformer, comprising one or more transformation phases wounding around a magnetic core, wherein at least one transformation phase includes:
conductive windings;
a first impedance-varying auxiliary winding divided into impedance circuit modules, the first impedance-varying auxiliary winding having a magnetic polarity;
a second impedance-varying auxiliary winding divided into impedance circuit modules, the second impedance-varying auxiliary winding having an inverse magnetic polarity to the magnetic polarity of the first impedance-varying auxiliary winding;
wherein the first impedance-varying auxiliary winding and second impedance-varying auxiliary winding are connected in series, defining impedance variation modules by interposing the impedance circuit modules one by one, each impedance variation module includes one impedance circuit modules of the first impedance-varying auxiliary winding connected in series with one impedance circuit modules of the second impedance-varying auxiliary winding, and each impedance variation module having a impedance tap;
a stepped-impedance-tap selector configured to be electrically coupled to the impedance taps of the impedance variation modules; and
an impedance controller configured to control the stepped-impedance-tap selector for varying the impedance of the transformation phase or the electric transformer.

2. The electric transformer of claim 1, wherein the electric transformer is a column-type or armored-type electric transformer.

3. The electric transformer of claim 2, wherein the electric transformer is a column-type electric transformer, and the first impedance-varying auxiliary winding and second impedance-varying auxiliary winding are arranged radially or axially to the conductive windings.

4. The electric transformer of claim 2, wherein the electric transformer is armored-type electric transformer, and the first impedance-varying auxiliary winding and second impedance-varying auxiliary winding are arranged in a stacked manner in side-by-side relationship to the conductive windings.

5. The electric transformer of claim 1, wherein the conductive windings are a primary winding and a secondary winding.

6. The electric transformer of claim 1, wherein the impedance controller is configured for varying the impedance of at least one transformation phase or the electric transformer under load.

7. The electric transformer of claim 1, wherein the electric transformer is a power or distribution electric transformer.

8. The electric transformer of claim 1, wherein the electric transformer is a single-phase or multi-phase transformer.

9. A method for varying the impedance in an electric transformer comprising one or more transformation phases wounding around a magnetic core, the method comprising the steps of:
disposing conductive windings;
disposing a first impedance-varying auxiliary winding divided into impedance circuit modules, the first impedance-varying auxiliary winding having a magnetic polarity;
disposing a second impedance-varying auxiliary winding divided into impedance circuit modules, the second impedance-varying auxiliary winding having an inverse magnetic polarity to the magnetic polarity of the first impedance-varying auxiliary winding;
connecting the first impedance-varying auxiliary winding and second impedance-varying auxiliary winding in series, by interposing the impedance circuit modules one by one for defining impedance variation modules, each impedance variation module includes one impedance circuit modules of the first impedance-varying auxiliary winding connected in series with one impedance circuit modules of the second impedance-varying auxiliary winding, and each impedance variation module having an impedance tap;
electrically coupling a stepped-impedance-tap selector to the impedance taps of the impedance variation modules; and
controlling, by an impedance controller, the stepped-impedance-tap selector for varying the impedance of the transformation phase or the electric transformer.

10. The method of claim 9, wherein the step of disposing a first impedance-varying auxiliary winding divided into impedance circuit modules, the first impedance-varying auxiliary winding is arranged radially or axially to the conductive windings when the electric transformer is of the column type.

11. The method of claim 9, wherein the step of disposing a second impedance-varying auxiliary winding divided into impedance circuit modules, the second impedance-varying auxiliary winding is arranged radially or axially to the conductive windings when the electric transformer is a column-type electric transformer.

12. The method of claim 9, wherein the step of disposing a first impedance-varying auxiliary winding divided into impedance circuit modules, the first impedance-varying auxiliary winding is arranged in a stacked manner in side-by-side relationship to the conductive windings when the electric transformer is an armored-type electric transformer.

13. The method of claim 9, wherein the step of disposing a second impedance-varying auxiliary winding divided into impedance circuit modules, the second impedance-varying auxiliary winding is arranged in a stacked manner in side-by-side relationship to the conductive windings when the electric transformer is an armored-type electric transformer.

14. The method of claim 9, wherein the step of controlling by an impedance controller the stepped-impedance-tap selector for varying the impedance of the transformation phase or the electric transformer, the impedance controller is configured for varying the impedance of at least one transformation phase or the electric transformer under load.
